# FASCICULE DE BREVET EUROPEEN

(11) **EP 0 467 746 B1**
(45) Date de publication et mention de la délivrance du brevet: **11.10.1995**
(21) Numéro de dépôt: 91401885.8
(22) Date de dépôt: 08.07.1991
(51) Int. Cl.: G02B 6/12

(54) **Procédé de réalisation de composants optiques intégrés**
Verfahren zur Herstellung optischer integrierter Komponenten
Method of making optical integrated components

(30) Priorité: 09.07.1990 FR 9008689
(43) Date de publication de la demande: 22.01.1992
(73) Titulaire: COMMISSARIAT A L'ENERGIE ATOMIQUE, 75015 Paris (FR)
(72) Inventeur: Valette, Serge, F-38100 Grenoble (FR)
(74) Mandataire: Dubois-Chabert, Guy

(56) Documents cités:
- EP-A- 0 367 675
- APPLIED OPTICS, vol. 14, no. 5, Mai 1975, NEW YORK US, W.-T. Tsang et al. : "Optical waveguides fabricated by preferential etching"
- PATENT ABSTRACTS OF JAPAN vol. 9, no. 93 (P-351)(1816) 23 Avril 1985 ; & JP-A-59 220 703
- PATENT ABSTRACTS OF JAPAN vol. 9, no. 292 (P-406)(2015) 19 Novembre 1985 ; & JP-A-60 129 711

## Description

La présente invention concerne un procédé de réalisation de composants optiques intégrés. Il s'applique notamment à la réalisation de circuits intégrés monomodes et multimodes.

Les procédés connus de réalisation de composants optiques intégrés ne peuvent être utilisés pour réaliser des composants optiques intégrés multimodes. En effet, la réalisation de composants optiques intégrés multimodes permettant des liaisons avec des fibres optiques multimodes relève de techniques complexes et onéreuses.

Les difficultés de réaliser de tels composants résultent de leurs dimensions et des contraintes liées à l'optique. Les dimensions des composants sont typiquement de plusieurs centaines de micromètres pour être compatibles avec les volumes mis en jeu dans les fibres multimodes.

La qualité des interfaces doit être compatible avec l'utilisation optique à courte longueur d'onde, pour laquelle les défauts et les irrégularités doivent être inférieurs à 0,1 µm.

La verticalité de certaines gravures doit être très bonne sur la dimension du composant, c'est-à-dire plusieurs centaines de micromètres.

Afin de résoudre ces problèmes, des chercheurs allemands ont proposé le procédé LIGA qui met en jeu une lithographie à rayons X, seul procédé capable de permettre la gravure de dimension micronique avec des profondeurs de champ de plusieurs centaines de micromètres.

Un tel procédé est décrit dans le document IEEE du 9 novembre 1987, intitulé "Micro Robots and Teleoperators Workshop".

Cette technique est très lourde et n'est de ce fait pas compatible avec des objectifs de production de masse et de coût pour des applications telles que l'automobile ou la domotique.

Un article intitulé "Optical Waveguide Fabricated by Preferential Etching" de W.T. Tsang et al (Applied Optics, volume 14, numéro 5, mai 1975, pages 1200-1206, New York, US) divulgue la réalisation d'une couche de silicium oxydée sur la surface d'un substrat, la formation avec cette couche oxydée d'un masque correspondant audit microguide optique à former, et la gravure au travers du masque, de manière à obtenir une cavité de forme désirée ; et la formation, sur la surface intérieure de ladite cavité, d'une couche oxydée périphérique d'épaisseur donnée constituant le revêtement optique du microguide, suivie du remplissage de la cavité ainsi revêtue par un matériau approprié d'indice supérieur à celui de ladite couche périphérique, ledit remplissage constituant le coeur optique du microguide.

La présente invention a pour objet un procédé permettant de résoudre les problèmes définis plus haut.

L'invention concerne donc un procédé de réalisation de composants optiques intégrés sur un substrat tel que défini à la revendication 1.

La gravure de la phase principale pour la réalisation des microguides est de préférence une gravure sèche.

Cette phase principale peut également comporter une dernière étape consistant à effectuer le dépôt d'une couche supérieure de protection.

La réalisation du second masque de la phase principale consiste à effectuer une oxydation thermique du substrat à haute ou à basse pression, selon l'épaisseur désirée de la couche, et à pratiquer des ouvertures dans la couche oxydée définissant le motif désiré.

L'étape de gravure de la phase principale consiste par exemple à réaliser une gravure ionique isotrope permettant d'obtenir des cavités de profondeur L, les motifs du masque étant choisis de manière à avoir une faible largeur D par rapport à cette profondeur L, afin d'obtenir des cavités de section droite pratiquement circulaire.

A titre d'exemple, D sera choisie entre 10 et 30 µm pour que la gravure sèche puisse s'effectuer et L pourra varier alors de 50 à 500 µm, le rapport profondeur/largeur devant être au moins égal à 5.

Pour obtenir, dans la phase préliminaire, des tranchées de section droite rectangulaire, l'étape de gravure de cette phase préliminaire consistera à réaliser une gravure ionique anisotrope ou une gravure chimique préférentielle.

Pour la réalisation de composants du type microguide, l'étape de remplissage des cavités selon la phase principale consistera à introduire un matériau d'indice de réfraction ng supérieur à celui de la couche périphérique intérieure des cavités.

Le matériau introduit qui va constituer le coeur du microguide est par exemple un matériau de même type que ceux employés dans la fabrication des fibres optiques plastiques. On peut choisir par exemple un polystyrène ou du PMMA. On peut également choisir des matériaux optiquement transparents.

Pour la réalisation, selon la phase préliminaire, d'autres types de composants, par exemple des miroirs réfléchissants ou des lames séparatrices, l'étape de remplissage des tranchées consiste à utiliser un matériau d'indice de réfraction nr, inférieur à celui de la couche périphérique intérieure des tranchées.

La gravure anisotrope selon la phase préliminaire est obtenue par gravure chimique préférentielle ou par gravure sèche du substrat sur une profondeur L′.

De préférence, la profondeur des tranchées à flancs verticaux obtenues dans cette phase préliminaire est supérieure à la profondeur L des cavités du microguide réalisé dans la phase principale.

L'étape d'oxydation thermique qui permet de former les couches d'arrêt sur les flancs verticaux des tranchées dans la phase préliminaire, permet en même temps de réaliser le masque qui permettra d'effectuer la gravure pour la réalisation du microguide dans la phase principale.

Cette oxydation thermique destinée à former les couches d'arrêt peut être réalisée sous haute pression, afin d'avoir une épaisseur suffisante qui donnera une bonne solidité aux parois. Dans ce cas, le fait de laisser les cavités remplies d'air permettra de travailler au voisinage de la réflexion totale, c'est-à-dire avec un angle d'incidence supérieur à ArcSin 1/n₁, n₁ étant l'indice du coeur des microguides.

Pour un angle i de valeur quelconque, l'on pourra faire un dépôt métallique à base d'aluminium, d'or, d'argent, par évaporation ou pulvérisation cathodique sous incidence.

On pourra également réaliser une oxydation thermique sous basse pression, mais alors il sera préférable de remplir les tranchées des miroirs de métal à basse température de fusion (aluminium, argent, indium), afin de consolider les parois.

Pour la réalisation de lames séparatrices, les tranchées formant ces lames pourront être remplies d'un matériau diélectrique d'indice de réfraction différent de celui du coeur des microguides.

D'autres caractéristiques et avantages de l'invention ressortiront mieux de la description qui va suivre, donnée à titre illustratif mais non limitatif, qui est faite en référence aux dessins annexés dans lesquels :
- les figures 1 à 4 représentent les différentes étapes de fabrication de divers composants optiques intégrés, permettant d'illustrer des caractéristiques du procédé conforme à l'invention ;
- la figure 1 représente l'étape de réalisation de cavités ou tranchées dans le substrat, la figure 1A étant relative à la formation d'un microguide, la figure 1B étant relative à la formation d'un miroir ou d'une lame séparatrice,
- les figures 2A et 2B représentent l'étape de formation d'une couche périphérique à l'intérieur des cavités ou tranchées,
- les figures 3A et 3B représentant l'étape de remplissage des cavités ou tranchées à partir de matériaux appropriés,
- les figures 4A et 4B représentent l'étape de couverture des cavités ou tranchées par une couche de protection,
- la figure 5 représente schématiquement les étapes de la phase préliminaire selon le procédé conforme à l'invention,
- la figure 6 représente schématiquement une plaquette comportant des composants de type microguide associés à des miroirs obtenus par le procédé conforme à l'invention.

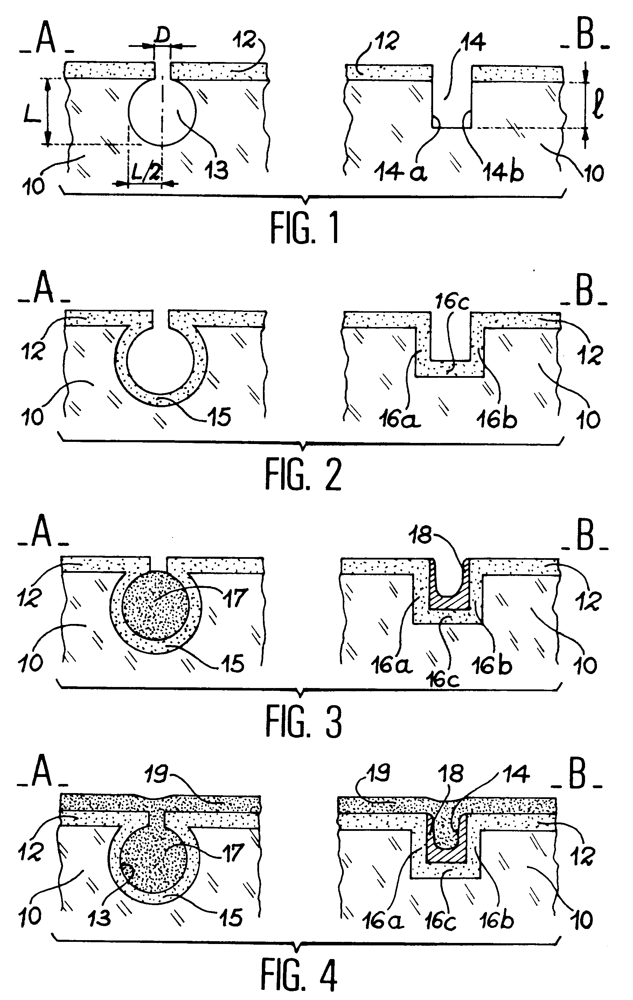

La figure 1A montre une coupe d'un substrat 10 surmonté d'un masque 12. Le masque a permis d'effectuer une gravure du substrat aux endroits non protégés, de manière à obtenir une cavité 13 dont la section droite est sensiblement circulaire. Pour cela le masque présente des ouvertures dont la largeur D est suffisamment faible par rapport à la profondeur L désirée de la cavité et la gravure est isotrope de type chimique ou préférentiellement sèche. Dans le cas d'une gravure sèche, il s'agira d'une gravure à géométrie contrôlée, réalisée par exemple à partir d'un mélange de gaz SF₆ et O₂ dans un réacteur de type micro-ondes.

La figure 1B représente schématiquement l'étape de réalisation d'une tranchée à section droite rectangulaire dans un substrat 10 surmonté d'un masque 12. Le masque a permis de réaliser une gravure du substrat aux endroits non protégés. La tranchée présente des flancs 14a et 14b très verticaux. La profondeur l de la tranchée sera généralement plus importante que celle obtenue dans le cas de la figure 1A et la gravure sera une gravure anisotrope de type chimique ou sèche.

Sur ces figures, on voit le substrat 10 en silicium monocristallin sur lequel a été réalisé un masque 12 muni de motifs de formes et de dimensions adaptées pour permettre la gravure de ce substrat, afin de former des cavités ou tranchées à l'intérieur du substrat. Le masque 12 a été obtenu par oxydation thermique du silicium pratiquée sous une pression et une température choisies de manière à former une couche de silice d'épaisseur suffisante.

Des ouvertures sont pratiquées dans la couche de silice 12 suivant le motif à réaliser sur une largeur D choisie. Ces ouvertures sont pratiquées par les techniques classiques de photogravure.

Dans le cas d'une gravure isotrope, les cavités obtenues ont une forme à section droite circulaire, la largeur D étant pour cela choisie entre 10 et 13 µm, cette largeur étant suffisamment faible tout en permettant de pratiquer cette gravure. La profondeur L varie entre 50 et 500 µm. Plus la profondeur L est importante par rapport à cette Largeur D et plus la section droite se rapproche de celle d'un cercle et donc est tout à fait compatible avec les sections droites des coeurs des fibres optiques.

Dans le cas de la gravure sèche anisotrope du substrat qui permet d'obtenir des sections droites rectangulaires à flancs très verticaux, la profondeur L est généralement plus faible.

Après avoir réalisé le masque 12 puis la gravure du substrat 10 pour obtenir des cavités ou tranchées, le procédé consiste à effectuer une oxydation thermique du silicium afin de former une couche périphérique d'épaisseur donnée sur partie ou sur toute la surface intérieure des cavités ou tranchées (le masque 12 pouvant être éliminé ou conservé). Sur la figure 2A l'oxydation thermique est réalisée sur toute la surface intérieure de la cavité et forme une couhe de silice 15 qui va constituer ultérieurement la gaine du microguide réalisé.

Sur la figure 2B l'oxydation thermique du silicium permet d'obtenir une couche périphérique sur les flancs verticaux 14a, 14b, et sur le fond de la tranchée cette couche portant les références 16a, 16b, 16c.

L'oxydation thermique peut se faire en pression normale pour obtenir de faibles épaisseurs de silice allant de 1 à 3 µm, ou sous haute pression (entre 10 et 20 bars) pour obtenir des épaisseurs de silice beaucoup plus élevées allant de 5 à 20 µm. De préférence l'on choisira de réaliser cette oxydation thermique sous haute pression et sous des températures situéees entre 800°C et 1100°C pour obtenir une épaisseur de 5 à 10 µm.

Après cette étape d'oxydation thermique, on procède à une étape de remplissage des cavités ou tranchées par un matériau approprié.

Sur la figure 3A, on a rempli la cavité 13 d'un matériau d'indice de réfraction supérieur à celui de la couche 15. On peut choisir par exemple un matériau utilisé dans la fabrication des fibres plastiques PMMA d'indice de réfraction égal à 1,49 ou un polystyrène d'indice de réfraction égal à 1,55. Ces matériaux étant liquides au-delà de 150°C environ, il est donc facile de les injecter puis d'attendre leur refroidissement, et ainsi d'obtenir une région 17 qui va former le coeur du microguide, comme représenté sur la figure 3A.

En pratique, tout matériau transparent pour les longueurs d'onde de travail et d'indice plus grand que celui de la silice peut convenir. Une colle thermodurcissable ou durcissable aux rayonnements ultraviolets, peut convenir.

Dans le cas de la figure 3B, si l'oxydation thermique ayant conduit à la formation de la couche périphérique 16a, 16b et 16c a été faite sous haute pression, l'épaisseur de cette couche allant de 10 à 20 µm est suffisante pour la solidité. On peut dans ce cas laisser la tranchée remplie d'air. Le matériau de remplissage étant l'air, la réflexion sera totale avec un angle d'indice i supérieur à ArcSin 1/n₁, n₁ étant l'indice du coeur du microguide qui pourra être associé au miroir ainsi formé. On peut aussi remplir la tranchée par dépôt d'une couche 18, qui correspondra à une métallisation dans le cas de la réalisation d'un miroir à réflexion non totale.

Une dernière étape, qui n'est cependant pas indispensable, peut consister à réaliser le dépôt d'une couche de protection (superstrat) sur les cavités ou tranchées qui ont été réalisées par le procédé précédent. On peut donc, pour réaliser cette étape, effectuer un redépôt basse température de silice ou d'un matériau de bas indice pour fermer les cavités ou tranchées. On pourra ainsi utiliser une colle optique ou un gel de silice.

Cette couche, qui a été représentée sur les figures 4A et 4B, porte la référence 19.

Le procédé conforme à l'invention permet de réaliser des composants tels que des microguides associés à d'autres types de composants, et notamment à des miroirs et/ou des lames séparatrices sur une même plaquette.

Pour cela, le procédé comporte une phase préliminaire permettant de réaliser les tranchées destinées à former des lames séparatrices et/ou des miroirs, et la phase principale qui va permettre de réaliser les microguides et d'achever la réalisation des miroirs et/ou les lames séparatrices à partir des cavités et tranchées obtenues lors de la phase préliminaire.

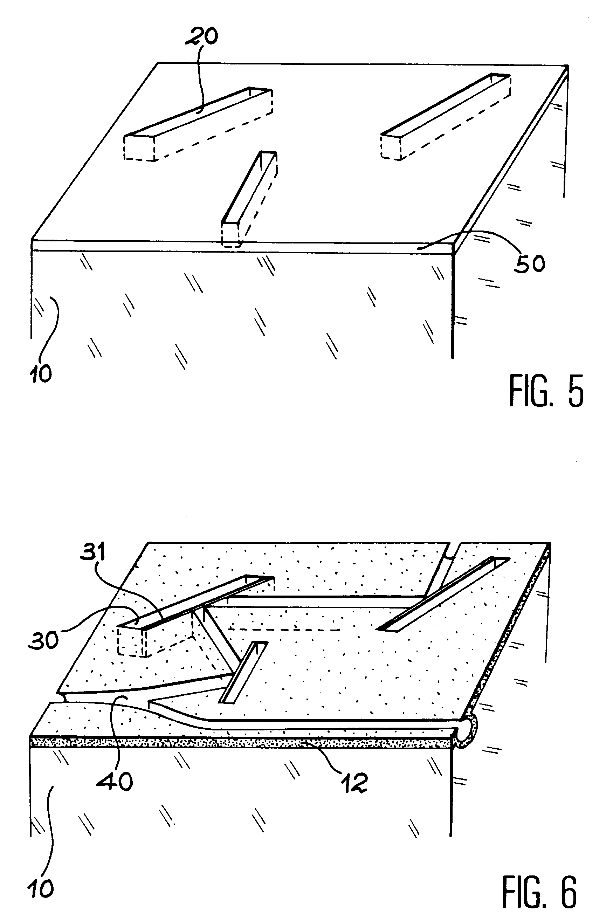

On a représenté sur la figure 5 un substrat 10 vu en perspective, dans lequel vont être formés les différents types de composants qui viennent d'être énoncés.

Le substrat 10 de silicium monocristallin est surmonté d'une couche 50 réalisant un premier masque comportant des motifs de formes et de dimensions déterminées correspondant aux longueurs et aux largeurs des miroirs ou des lames séparatrices que l'on désire obtenir.

Ce masque est obtenu par dépôt d'un matériau permettant une attaque chimique, on utilisera de préférence du Si₃N₄ (on peut également utiliser la silice ou un métal).

Puis on procèdera à une gravure de cette couche de Si₃N₄ suivant les motifs 20 dont deux côtés sont choisis parallèles à la trace des plans d'arrêt qui vont ultérieurement servir lors de la gravure isotrope pratiquée pour réaliser les cavités formant les microguides et qui sera de préférence une gravure sèche.

On procède ensuite à une attaque chimique préférentielle anisotrope qui est réalisée de manière classique en mettant en jeu des agents d'attaque basique avec un alcool comme modérateur (KOH+éthanol ou méthanol, diéthylamine + alcool), cette attaque chimique préférentielle va être réalisée sur une profondeur L′ supérieure à L, L étant la profondeur des cavités formant les microguides.

On va procéder ensuite à l'élimination du nitrure de silicium, c'est-à-dire de la couche qui a formé le masque. Si l'attaque est anisotrope sèche, on réalisera la même opération, mais sans aucune contrainte de suivre des plans cristallins. L'attaque sèche sera alors par exemple réalisée par gravure micro-onde avec du gaz de type SF₆ pour un masque de silice.

Après cette étape préliminaire, on va mettre en oeuvre les différentes étapes constituant la phase principale pour, d'une part former les cavités destinées à réaliser les microguides et, d'autre part, terminer la réalisation des miroirs et/ou des lames séparatrices.

Pour cela, on procède à la réalisation d'un deuxième masque 12 par oxydation thermique du substrat. Cette étape va permettre de créer une couche d'arrêt pour la gravure sèche, qui va être pratiquée pour former les cavités des microguides. On peut également utiliser cette étape d'oxydation thermique du substrat pour former un masque destiné à cette gravure sèche du substrat lors de la formation des cavités utilisées pour réaliser les microguides.

Si le masque n'est pas réalisé au cours de cette étape, il peut l'être indépendamment par dépôt ou oxydation thermique.

La figure 6 représente le schéma de la plaquette dans laquelle sont réalisés les microguides associés à des miroirs. Ce schéma permet d'illustrer plus particulièrement l'étape de réalisation des composants concernant la gravure isotrope pratiquée pour réaliser les cavités 40 qui vont permettre de former les microguides. On a également représenté sur ce schéma les flancs verticaux 31 qui sont des plans d'arrêt à la gravure isotrope des cavités des microguides. La gravure isotrope des microguides 40 a été réalisée, comme cela a déjà été dit, à partir du masque 12 qui a été formé par oxydation thermique du substrat, dans les conditions énoncées précédemment.

Les tranchées 30 formant les miroirs peuvent être remplies d'air et l'on obtiendra dans ce cas une réflexion totale avec un angle d'incidence i supérieur à ArcSin 1/n₁, n₁ étant l'indice de coeur du microguide. On peut également pratiquer un dépôt métallique d'aluminium, de chrome, d'or ou d'argent, par évaporation ou pulvérisation cathodique sous incidence. L'angle d'incidence i pourra alors être quelconque. On peut également remplir ces tranchées de métal à basse température de fusion, par exemple aluminium, argent, indium, pour consolider la paroi, mais bien sûr cette variante d'exécution ne pourra être appliquée que pour les tranchées qui vont former des miroirs et non des lames séparatrices.

Dans le cas de lames séparatrices, les tranchées pourront être remplies par un diélectrique d'indice assez différent de celui du coeur du microguide (par exemple de la colle optique).

En conclusion :
- les cavités réalisées pour les microguides peuvent être obtenue soit par une gravure isotrope, soit par une gravure anisotrope, ces deux types de gravures pouvant être aussi bien chimique que sèche ; avantageusement, ces cavités sont réalisées par une gravure isotrope sèche,
- les tranchées réalisés pour les autres composants (lames séparatrices, miroirs, lentilles, dioptres...) sont obtenues par une gravure anisotrope qui peut être sèche ou chimique,
- les miroirs, dans le cas de la réflexion totale, sont réalisés soit en utilisant de l'air dans la cavité recouverte de SiO₂, soit en utilisant une couche 18 métallique,
- les miroirs, dans le cas de la réflexion non totale, sont réalisés en utilisant obligatoirement une couche 18 métallique et éventuellement une couche de protection 19,
- dans ces deux derniers cas, les tranchées utilisées pour les miroirs sont obtenues de préférence soit par une gravure anisotrope chimique pour avoir des parois planes, soit par une gravure anisotrope sèche pour avoir des parois non planes, par exemple paraboliques ou elliptiques,
- les lames séparatrices sont réalisées lors des conditions de réflexion totale soit en utilisant de l'air, soit un diélectrique d'indice de réfraction différent de celui du coeur du microguide associé ; dans le cas de l'utilisation d'un diélectrique, on peut également utiliser une couche 19 de protection,
- les lentilles ou les dioptres sont réalisés de la même façon que les lames séparatrices, mais avec obligatoirement utilisation d'une gravure anisotrope sèche pour obtenir des tranchées à parois non planes (convexe ou concave) avec remplissage d'air ou de diélectrique dans les mêmes conditions que les lames séparatrices.

## Revendications

1. Procédé de réalisation de composants optiques intégrés sur un substrat, incluant au moins un guide optique à confinement latéral de lumière, dit microguide optique, associé avec au moins un autre composant optique intégré tel que miroir, lame séparatrice, lentille, dioptre, caractérisé en ce que ledit procédé comporte une phase préliminaire pour la réalisation dudit autre composant optique intégré et une phase principale pour la réalisation dudit microguide optique,
ladite phase préliminaire comportant les étapes suivantes:
- réaliser sur la surface du substrat un premier masque (50) ayant des motifs de formes et de dimensions déterminées correspondant audit autre composant optique à former,
- réaliser une gravure anisotrope dans les parties du substrat non protégées par ledit premier masque pour former au moins une tranchée (20) à flancs verticaux, destinée à former ledit autre composant optique intégré,
- éliminer le premier masque, et
- réaliser une oxydation thermique du substrat ainsi gravé pour former, respectivement, une couche oxydée sur la surface du substrat, destinée à servir de masque pour la gravure de la phase principale, et des couches oxydées sur les flancs verticaux de ladite tranchée, aptes à servir de couches d'arrêt (31) lors de la gravure de la phase principale;
et ladite phase principale comprenant les étapes suivantes:
- réaliser avec ladite couche oxydée formée sur la surface du substrat un second masque (12) ayant des motifs de formes et de dimensions déterminées correspondant audit microguide optique à former,
- effectuer une gravure dans les parties du substrat non protégées par le second masque, de manière à obtenir au moins une cavité (13) de forme désirée,
- effectuer une oxydation thermique pour former une couche périphérique (15, 16a, 16b, 16c) d'épaisseur donnée sur une partie ou sur toute la surface intérieure de ladite cavité, ladite couche périphérique constituant le revêtement optique du microguide, et
- réaliser un remplissage (17, 18) de la cavité ainsi revêtue par un matériau approprié d'indice de réfraction supérieur à celui de ladite couche périphérique, ledit remplissage constituant le coeur optique du microguide.

2. Procédé de réalisation de composants optiques intégrés selon la revendication 1, caractérisé en ce que la gravure du substrat de la phase principale est une gravure isotrope sèche.

3. Procédé de réalisation de composants optiques intégrés selon la revendication 1 ou 2, caractérisé en ce qu'il comporte en outre à la fin de la phase principale une étape consistant à effectuer le dépôt d'une couche supérieure (19) de protection.

4. Procédé de réalisation de composants optiques intégrés selon la revendication 1, ou 2 ou 3, caractérisé en ce que la réalisation du premier et/ou second masque (12) consiste à :
- effectuer une oxydation thermique du substrat à haute ou à basse pression, selon l'épaisseur désirée pour la couche ainsi formée par oxydation,
- réaliser des ouvertures dans la couche oxydée définissant les motifs désirés.

5. Procédé de réalisation de composants optiques intégrés selon l'une quelconque des revendications 1 à 4, caractérisé en ce que l'étape de gravure de la phase principale consiste à réaliser une gravure ionique isotrope permettant d'obtenir pour le microguide une cavité de profondeur L, les motifs du second masque étant choisis de manière à avoir une faible largeur D par rapport à cette profondeur L, pour obtenir une cavité de section droite pratiquement circulaire.

6. Procédé de réalisation de composants optiques intégrés selon la revendication 5, caractérisé en ce que le rapport profondeur/largeur est au moins égal à 5.

7. Procédé de réalisation de composants optiques intégrés selon l'une quelconque des revendications 1 à 4, caractérisé en ce que l'étape de gravure de la phase préliminaire consiste à réaliser une gravure ionique anisotrope permettant d'obtenir une tranchée de section droite rectangulaire.

8. Procédé de réalisation de composants optiques intégrés selon la revendication 1, caractérisé en ce que le matériau de remplissage constitutif du microguide est un matériau de même type que ceux employés pour la fabrication des fibres optiques plastiques.

9. Procédé de réalisation de composants optiques intégrés selon la revendication 1, caractérisé en ce que le matériau de remplissage constitutif du microguide est un matériau optiquement transparent et durcissable.

10. Procédé de réalisation de composants optiques intégrés selon l'une quelconque des revendications 1 à 4 et 5, caractérisé en ce que les tranchées utilisées pour réaliser tout composant autre que les microguides sont ensuite remplies d'un matériau d'indice de réfraction nr inférieur à celui de la couche périphérique intérieure des tranchées.

11. Procédé de réalisation de composants optiques intégrés selon la revendication 1, caractérisé en ce que l'étape de gravure anisotrope de la phase préliminaire consiste à réaliser une gravure chimique préférentielle du substrat sur une profondeur L′.

12. Procédé de réalisation de composants optiques intégrés selon la revendication 10, caractérisé en ce que la profondeur de la tranchée à flancs verticaux L′ est supérieure à la profondeur L de la cavité du microguide.

13. Procédé de réalisation de composants optiques intégrés selon la revendication 1, selon lequel l'autre composant optique à réaliser est un miroir, caractérisé en ce que l'oxydation thermique destinée à former la couche périphérique de la cavité pour le microguide est réalisée sous haute pression et en ce que la tranchée destinée à former le miroir est remplie d'air.

14. Procédé de réalisation de composants optiques intégrés selon la revendication 1, selon lequel l'autre composant optique à réaliser est un miroir, caractérisé en ce que l'oxydation thermique destinée à former la couche périphérique de la cavité pour le microguide est réalisée sous haute pression et en ce qu'on réalise un dépôt métallique par évaporation ou pulvérisation cathodique dans la tranchée destinée à former le miroir.

15. Procédé de réalisation de composants optiques intégrés selon la revendication 1, selon lequel l'autre composant à réaliser est un miroir, caractérisé en ce que l'oxydation thermique destinée à former la couche périphérique de la cavité pour le microguide est réalisée à basse pression et en ce que la tranchée destinée à former le miroir est remplie par un métal à basse température de fusion.

16. Procédé de réalisation de composants optiques intégrés selon la revendication 1, selon lequel l'autre composant optique à réaliser est une lame séparatrice, caractérisé en ce que la tranchée destinée à former la lame séparatrice est remplie d'un matériau diélectrique d'indice de réfraction différent de celui du coeur du microguide.

## Patentansprüche

1. Verfahren zur Herstellung integrierter optischer Komponenten auf einem Substrat, wenigstens einen optischen, Mikroleiter genannten Leiter umfassend, verbunden mit wenigstens einer anderen integrierten optischen Komponente wie z.B. Spiegel, Teilerplatte, Linse, Diopter,
**dadurch gekennzeichnet,**
daß besagtes Verfahren eine Vorphase für die Herstellung der genannten anderen integrierten optischen Komponente umfaßt und eine Hauptphase für die Herstellung des genannten Mikroleiters,
wobei die Vorphase die folgenden Schritte umfaßt:
- Herstellen einer ersten Maske (50) auf der Oberfläche des Substrats, die Muster mit bestimmten Formen und Abmessungen aufweist, die der zu bildenden anderen optischen Komponente entsprechen,
- Durchführen einer anisotropen Ätzung in den durch die erste Maske nicht geschützten Teilen des Substrats, um wenigstens einen Graben (20) mit vertikalen Flanken zu bilden, dazu bestimmt, die genannte andere integrierte optische Komponente zu bilden.
- Entfernen der ersten Maske, und
- Durchführen einer thermischen Oxidation des so geätzten Substrats, um jeweils eine oxidierte Schicht auf der Oberfläche des Substrats zu bilden, die als Maske für die Ätzung der Hauptphase dient, und oxidierte Schichten auf den vertikalen Flanken des genannten Grabens, geeignet bei der Ätzung der Hauptphase als Sperrschichten (31) zu dienen;
und besagte Hauptphase die folgenden Schritt umfaßt:
- Herstellen - mit der auf der Oberfläche des Substrats gebildeten oxidierten Schicht - einer zweiten Maske (12) mit Mustern mit bestimmten Formen und Abmessungen, die dem zu bildenden optischen Mikroleiter entsprechen,
- Durchführen einer Ätzung in den durch die zweite Maske nicht geschützten Teilen des Substrats, um wenigstens einen Hohlraum (13) einer erwünschten Form zu erhalten,
- Durchführen einer thermischen Oxidation, um eine periphere Schicht (15, 16a, 16b, 16c) einer gegebenen Dicke auf einem Teil oder auf der gesamten Innenoberfläche des genannten Hohlraums zu bilden, wobei besagte periphere Schicht die optische Verkleidung des Mikroleiters bildet, und
- Herstellen einer Füllung (17, 18) des so verkleideten Hohlraums durch ein geeignetes Material mit einem höheren Brechungsindex als dem der peripheren Schicht, wobei besagte Füllung den optischen Kern des Mikroleiters bildet.

2. Verfahren zur Herstellung integrierter optischer Komponenten nach Anspruch 1, dadurch gekennzeichnet, daß die Ätzung des Substrats der Hauptphase eine isotrope Trockenätzung ist.

3. Verfahren zur Herstellung integrierter optischer Komponenten nach Anspruch 1 oder 2, dadurch gekennzeichnet, daß es außerdem am Ende der Hauptphase einen Schritt umfaßt, der darin besteht, das Abscheiden einer Schutz-Deckschicht (19) durchzuführen.

4. Verfahren zur Herstellung integrierter optischer Komponenten nach Anspruch 1 oder 2 oder 3, dadurch gekennzeichnet, daß die Herstellung der ersten und/oder zweiten Maske folgende Schritte umfaßt:
- Durchführen einer thermischen Oxidation des Substrats bei hohem oder bei niedrigem Druck, je nach erwünschter Dicke der durch Oxidation gebildeten Schicht,
- Herstellen von die erwünschten Muster definierenden Öffnungen in der oxidierten Schicht.

5. Verfahren zur Herstellung integrierter optischer Komponenten nach einem der Ansprüche 1 bis 4, dadurch gekennzeichnet, daß der Ätzschritt der Hauptphase darin besteht, eine isotrope Ionenätzung durchzuführen, die ermöglicht, für den Mikroleiter einen Hohlraum der Tiefe L zu erhalten, wobei die Muster der zweiten Maske derart gewählt werden, daß man, bezogen auf diese Tiefe L, eine kleine Breite D erhält, um einen Hohlraum mit einem praktisch kreisförmigen Querschnitt herzustellen.

6. Verfahren zur Herstellung integrierter optischer Komponenten nach Anspruch 5, dadurch gekennzeichnet, daß das Verhältnis Tiefe/Breite wenigstens gleich 5 ist.

7. Verfahren zur Herstellung integrierter optischer Komponenten nach einem der Ansprüche 1 bis 4, dadurch gekennzeichnet, daß der Ätzschritt der Vorphase darin besteht, eine anisotrope Ionenätzung durchzuführen, die ermöglicht, einen Graben mit einem engen rechwinkligen Querschnitt herzustellen.

8. Verfahren zur Herstellung integrierter optischer Komponenten nach Anspruch 1, dadurch gekennzeichnet, daß das den Mikroleiter bildende Füllmaterial von demselben Typ ist wie die Materialen, die zur Herstellung von Kunststoff-Lichtleitfasern verwendet werden.

9. Verfahren zur Herstellung integrierter optischer Komponenten nach Anspruch 1, dadurch gekennzeichnet, daß das den Mikroleiter bildende Füllmaterial ein optisch transparentes und härtbares Material ist.

10. Verfahren zur Herstellung integrierter optischer Komponenten nach einem der Ansprüche 1 bis 4 und 5, dadurch gekennzeichnet, daß die Gräben zur Herstellung von jeder Komponente außer den Mikroleitern anschließen gefüllt werden mit einem Material eines Brechungsindex nr, der kleiner ist als der der inneren peripheren Schicht der Gräben.

11. Verfahren zur Herstellung integrierter optischer Komponenten nach Anspruch 1, dadurch gekennzeichnet, daß der Schritt der anisotropen Ätzung der Vorphase darin besteht, eine bevorzugte chemische Ätzung des Substrats auf eine Tiefe L' durchzuführen.

12. Verfahren zur Herstellung integrierter optischer Komponenten nach Anspruch 10, dadurch gekennzeichnet, daß die Tiefe L′ des Grabens mit vertikalen Flanken größer ist als die Tiefe L des Hohlraums des Mikroleiters.

13. Verfahren zur Herstellung integrierter optischer Komponenten nach Anspruch 1, nach dem die andere herzustellende optische Komponente ein Spiegel ist, dadurch gekennzeichnet, daß die thermische Oxidation zum Bilden der peripheren Schicht des Hohlraums für den Mikroleiter unter hohem Druck durchgeführt wird, und dadurch, daß der zur Bildung des Spiegels bestimmte Graben mit Luft gefüllt wird.

14. Verfahren zur Herstellung integrierter optischer Komponenten nach Anspruch 1, nach dem die andere herzustellende optische Komponente ein Spiegel ist, dadurch gekennzeichnet, daß die thermische Oxidation zum Bilden der peripheren Schicht des Hohlraums für den Mikroleiter unter hohem Druck durchgeführt wird, und dadurch, daß man in dem zur Bildung des Spiegels bestimmten Graben eine metallische Abscheidung mittels Verdampfung oder Kathodenzerstäubung durchführt.

15. Verfahren zur Herstellung integrierter optischer Komponenten nach Anspruch 1, nach dem die andere herzustellende optische Komponente ein Spiegel ist, dadurch gekennzeichnet, daß die thermische Oxidation zum Bilden der peripheren Schicht des Hohlraums für den Mikroleiter unter niedrigem Druck durchgeführt wird, und dadurch, daß der zur Bildung des Spiegels bestimmte Graben gefüllt wird mit einem Metall mit einem niedrigen Schmelzpunkt.

16. Verfahren zur Herstellung integrierter optischer Komponenten nach Anspruch 1, nach dem die andere herzustellende optische Komponente eine Teilerplatte ist, dadurch gekennzeichnet, daß der zur Bildung der Teilerplatte bestimmte Graben gefüllt wird mit einem dielektrisches Material mit einem anderen Brechungsindex als dem des Kerns des Mikroleiters.

## Claims

1. Process for the production of integrated optical components on a substrate, including at least one lateral light confinement optical guide, called an optical microguide, associated with at least one other integrated optical component such as a mirror, separating plate, lens, or diopter, characterized in that said process involves a preliminary phase for producing said other integrated optical component and a main phase for producing said optical microguide, said preliminary phase having the following stages:
- producing on the surface of the substrate a first mask (50) having patterns with predetermined shapes and sizes corresponding to said other optical component to be formed, performing an anisotropic etching in parts of the substrate not protected by the first mask for forming at least one trench (50) with vertical walls for forming said other integrated optical component,
- eliminating the first mask and
- performing a thermal oxidation of the thus etched substrate in order to respectively form an oxidized layer on the substrate surface, which will serve as a mask for the etching of the main phase, and oxidized layers on the vertical walls of said trench able to serve as barrier layers (31) during the etching of the main phase,
- and said main phase comprises the following stages:
producing with said oxidized layer formed on the substrate surface a second mask (12) having patterns with predetermined shapes and sizes corresponding to the optical microguide to be formed,
etching in the parts of the substrate not protected by the second mask, so as to obtain at least one cavity (13) with the desired shape,
performing a thermal oxidation to form a peripheral layer (15, 16a, 16b, 16c) of given thickness on part or all of the interior surface of said cavity, said peripheral layer constituting the optical coating of the microguide and
filling (17, 18) the thus coated cavity with a material of a suitable refractive index above that of said peripheral layer, said filling constituting the optical core of the microguide.

2. Process for producing integrated optical components according to claim 1, characterized in that the etching of the substrate of the main phase is a dry isotropic etching.

3. Process for the production of integrated optical components according to claim 1 or 2, characterized in that, at the end of the main phase, it also involves a stage consisting of depositing an upper protective layer (19).

4. Process for producing integrated optical components according to claim 1, 2 or 3, characterized in that the production of the first or second mask consists of performing a thermal oxidation of the substrate at high or low pressure, as a function of the desired thickness for the layer formed in this way by oxidation and producing openings in the oxidized layer defining the desired patterns.

5. Process for producing integrated optical components according to any one of the claims 1 to 4, characterized in that the etching stage of the main phase consists of carrying out an isotropic ionic etching making it possible to obtain for the microguide a cavity of depth L, the patterns of the second mask being chosen so as to have a limited width D relative to the depth L, in order to obtain a cavity with a substantially circular cross-section.

6. Process for producing integrated optical components according to claim 5, characterized in that the depth/width ratio is at least equal to 5.

7. Process for the production of integrated optical components according to any one of the claims 1 to 4, characterized in that the etching stage of the preliminary phase consists of carrying out an anisotropic ionic etching making it possible to obtain a trench with a rectangular cross-section.

8. Process for the production of integrated optical components according to claim 1, characterized in that the filling material constituting the microguide is a material of the same type as those used for the production of plastic optical fibers.

9. Process for the production of integrated optical components according to claim 1, characterized in that the filling material constituting the microguide is an optically transparent and hardenable material.

10. Process for the production of integrated optical components according to any one of the claims 1 to 4 and 5, characterized in that the trenches used for producing any component other than the microguides are then filled with a material having a refractive index below that of the internal peripheral layer of the trenches.

11. Process for the production of integrated optical components according to claim 1, characterized in that the anisotropic etching stage of the preliminary phase consists of carrying out a preferred chemical etching of the substrate over a depth L′.

12. Process for the production of integrated optical components according to claim 10, characterized in that the depth L′ of the trench with vertical walls exceeds the depth L of the cavity of the microguide.

13. Process for the production of integrated optical components according to claim 1 and according to which the other optical component to be produced is a mirror, characterized in that the thermal oxidation intended to form the peripheral of the cavity for the microguide is performed under high pressure and in that the trench intended to form the mirror is filled with air.

14. Process for the production of integrated optical components according to claim 1 according to which the other optical component to be produced is a mirror, characterized in that the thermal oxidation for forming the peripheral layer of the cavity for the microguide is performed under high pressure and in that a metallic deposition takes place by evaporation or cathodic sputtering in the trench intended to form the mirror.

15. Process for the production of integrated optical components according to claim 1 according to which the other component to be produced is a mirror, characterized in that the thermal oxidation for performing the peripheral layer of the cavity for the microguide is carried out at low pressure and in that the trench for forming the mirror is filled with a metal having a low melting point.

16. Process for the production of integrated optical components according to claim 1 according to which the other optical component to be produced is a separating plate, characterized in that the trench intended for the separating plate is filled with a dielectric material having a refractive index different from that of the microguide core.
